# EUROPÄISCHE PATENTANMELDUNG

(11) **EP 1 839 801 A1**
(43) Veröffentlichungstag der Anmeldung: **03.10.2007**
(21) Anmeldenummer: 06006791.5
(22) Anmeldetag: 30.03.2006
(51) Int. Cl.: B23P 6/00, F01D 5/00, B26F 1/26, C23C 4/18

(54) **Reparaturverfahren zum Instandsetzen von Bauteilen**

(71) Anmelder: SIEMENS AKTIENGESELLSCHAFT, 80333 München (DE)
(72) Erfinder: Bostanjoglo, Georg, Dr., 12161 Berlin (DE); Ladru, Francis-Jurjen, Dr., 14050 Berlin (DE); Oppert, Andreas, 14612 Falkensee (DE); Reymann, Helge, 14167 Berlin (DE); Wollnik, Adrian, 13585 Berlin (DE)

(57) **Zusammenfassung**

Die Erfindung betrifft ein Reparaturverfahren zur Instandsetzung von Bauteilen, die zumindest eine Öffnung (418) aufweisen und mit einer Beschichtung versehen sind, bei dem die Beschichtung vollständig von dem Bauteil entfernt wird, eine neue Beschichtung (2, 3) flächig auf das Bauteil aufgebracht wird, wobei die zumindest eine Öffnung (418) ganz oder teilweise verschlossen wird, und die neu aufgebrachte Beschichtung (2, 3) lokal im Bereich der zumindest einen Öffnung (418) entfernt wird, dadurch gekennzeichnet, dass ein fokussierter Flüssigkeitsstrahl (6) verwendet wird, um die neu aufgebrachte Beschichtung (2, 3) lokal im Bereich der Öffnung (418) zu entfernen.

## Beschreibung

Die Erfindung betrifft ein Reparaturverfahren zur Instandsetzung von Bauteilen, die zumindest eine Öffnung aufweisen und mit einer Beschichtung versehen sind, bei dem die Beschichtung vollständig von dem Bauteil entfernt wird, eine neue Beschichtung flächig auf das Bauteil aufgebracht wird, wobei die zumindest eine Öffnung ganz oder teilweise verschlossen wird, und die,neu aufgebrachte Beschichtung lokal im Bereich der zumindest eine Öffnung entfernt wird.

Reparaturverfahren dieser Art sind bekannt und werden beispielsweise eingesetzt, um Turbinenschaufeln, die insbesondere in Turbinen oder Brennkammern eingesetzt werden, zu reparieren. Solche Turbinenschaufeln sind zum Schutz gegen Korrosion und Oxidation häufig mit einer Korrosionsschutzschicht versehen. Dies ist für Gasturbinenschaufeln unerlässlich, da sie in einem Temperaturbereich oberhalb 600°C oder sogar oberhalb von 1000°C zum Einsatz kommen.

Entsprechende Schutzschichten weisen meist die allgemeine Zusammensetzung MCrAlX auf, wobei M für Eisen, Kobalt oder Nickel steht und X aus der Gruppe Yttrium, Scandium, Lanthan und Seltene Erden ausgewählt ist. Solche Legierungen sind in der EP 0 486 489 B1, EP 0 786 017 B1, EP 0 412 397 B1 und EP 1 306 454 A1 beschrieben. Diese Schutzschichten werden beispielsweise auf den Grundkörper einer Turbinenschaufel, die aus einer Nickel- oder Kobalt-Basis-Superlegierung besteht, aufgebracht.

In einigen Fällen ist zusätzlich auf der Korrosionsschutzschicht eine keramische Wärmdämmschicht vorhanden. Beispiel für komplexe Schichtstrukturen sind etwa in den DE 600 02 101 T2 und DE 699 05 910 T2 offenbart.

Während des Betriebs nutzt sich die Beschichtung der Turbinenschaufeln einerseits durch Oxidation und Korrosion ab, und kommt es andererseits zu Erosion und mechanischen Beschädigungen. Um eine längere Lebensdauer der Turbinenschaufeln zu gewährleisten ist es sinnvoll, nach einer gewissen Betriebszeit, die Beschichtung zu erneuern. Dieses "Refurbishment" erfordert zunächst die sorgfältige, vollständige Entfernung der alten Beschichtung von der Turbinenschaufel, was beispielsweise mittels eines Wasserstrahls erfolgen kann, wie dies aus der DE 690 20 507 T2 bekannt ist.

Ist das Bauteil bereit für die Neubeschichtung, wird diese nach einem geeigneten Verfahren aufgebracht. Entsprechende Techniken sind in den US-A-3 413 136, 4 055 705 und 4 321 311 beschrieben. Bei der Neubeschichtung werden gegebenenfalls vorhandene Öffnungen des Bauteils ganz oder teilweise verschlossen und müssen daher wieder vollständig eröffnet werden.

In der US 6,004,620 ist ein Verfahren beschrieben, bei dem Kühlluftbohrungen, die sich von der Innen- bis zur Außenseite einer Turbinenschaufel erstrecken, nach dem Beschichten der Außenseite der Turbinenschaufel wieder geöffnet werden. Dazu wird ein Flüssigkeitsstrahl von der Innenseite der Turbinenschaufel aus in die Kühlluftbohrungen geleitet, der dann die Beschichtung im Bohrbereich ganz oder teilweise abträgt. Nachteilig ist allerdings, dass es hierbei zu Abplatzungen der Beschichtung außerhalb des Bohrbereichs kommen kann, wodurch die Beschichtung erheblich beschädigt wird, was letztendlich zu einem Ausfall des Bauteils führen kann.

Der Erfindung liegt daher die Aufgabe zugrunde, ein Reparaturverfahren der eingangs genannten Art so auszugestalten, dass das lokale Entfernen der neu aufgebrauchten Beschichtung schnell und effizient und ohne Beschädigung des Bauteils gelingt.

Die Aufgabe wird erfindungsgemäß dadurch gelöst, dass ein fokussierter Flüssigkeitsstrahl verwendet wird, um die neu aufgebrachte Beschichtung lokal im Bereich der Öffnung zu entfernen.

Der Einsatz des fokussierten Flüssigkeitsstrahls beschleunigt nicht nur die Wiedereröffnung, sondern ermöglicht es auch, eine Beschädigung der sonstigen Beschichtung und des Bauteils zu vermeiden. Es ist eine extrem präzise Bearbeitung entsprechend der Kontur der Öffnung möglich. Dazu kann die Kontur der Öffnung beispielsweise in mehreren zyklischen Durchläufen von innen nach außen oder von außen nach innen mit dem Flüssigkeitsstrahl abgefahren werden, wobei hier der Durchmesser des Flüssigkeitsstrahls kleiner als die Öffnung sein sollte.

Gemäß einer Ausführungsform der Erfindung besteht der Flüssigkeitsstrahl im Wesentlichen aus Wasser. Dies ist vorteilhaft, da Wasser sehr günstig und weder toxisch noch brennbar ist.

Gemäß einer weiteren Ausführungsform der Erfindung kann der Flüssigkeitsstrahl abrasive Partikel enthalten. Der Zusatz von abrasiven Partikeln führt dazu, dass die Beschichtung im Bereich der zumindest einen Öffnung schneller abgetragen werden kann. Infolgedessen ist auch der Verbrauch von Flüssigkeit geringer.

Versuche haben gezeigt, dass gute Ergebnisse erzielt werden, wenn die abrasiven Partikel aus Granat, Korund oder Zirkonkorund bestehen oder es enthalten und/oder einen mittleren Durchmesser 44-300 µm (325-45 Mesh) haben. In diesem Fall wird eine hohe Abtraggeschwindigkeit erzielt.

Wenn abrasive Partikel mit einer Förderrate von 5-250 g pro Stunde im Flüssigkeitsstrahl enthalten sind, kann die Entfernung der Beschichtung schnell und sicher erfolgen, ohne dass eine unnötig große Menge abrasiver Partikel verwendet werden muss.

In Ausbildung des Verfahrens ist vorgesehen, dass der Flüssigkeitsstrahl einen Druck zwischen 200 und 600 bar aufweist. Damit kann die zumindest eine Öffnung zügig wiedereröffnet werden und es besteht gleichzeitig nicht die Gefahr, dass das Bauteil beschädigt wird.

Der Flüssigkeitsstrahl kann von einer Düse abgegeben werde, die bevorzugt einen Durchmesser von 0.05-0.5 mm aufweist. Auf dieser Weise wird ein Flüssigkeitsstrahl erhalten, der zur präzisen Bearbeitung geeignet ist. Wenn die Düse mit einem Abstand von 1 bis 6 cm zu dem Bauteil angeordnet ist, weist der Flüssigkeitsstrahl eine hohe Fokussierung auf, wenn er auf das Bauteil trifft.

Das erfindungsgemäße Verfahren ist besonders für metallische oder keramische Beschichtungen geeignet. Diese können schnell und effizient mit Hilfe des fokussierten Flüssigkeitsstrahls von der zumindest einen Öffnung entfernt werden.

Die Erfindung wird beispielhaft anhand der Zeichnungen näher erläutert. Es zeigen schematisch:
- Figur 1: eine perspektivische Ansicht einer Laufschaufel oder Leitschaufel einer Strömungsmaschine,
- Figur 2: einen Querschnitt durch die Laufschaufel oder Leitschaufel gemäß der Figur 1,
- Figur 3: eine Vergrößerung des Ausschnitts x gemäß der Figur 3,
- Figur 4: eine Aufsicht auf die Kühlluftbohrung 418 gemäß der Figur 3
- Figur 5: einen Längsteilschnitt einer Gasturbine, und
- Figur 6: eine Brennkammer einer Gasturbine.

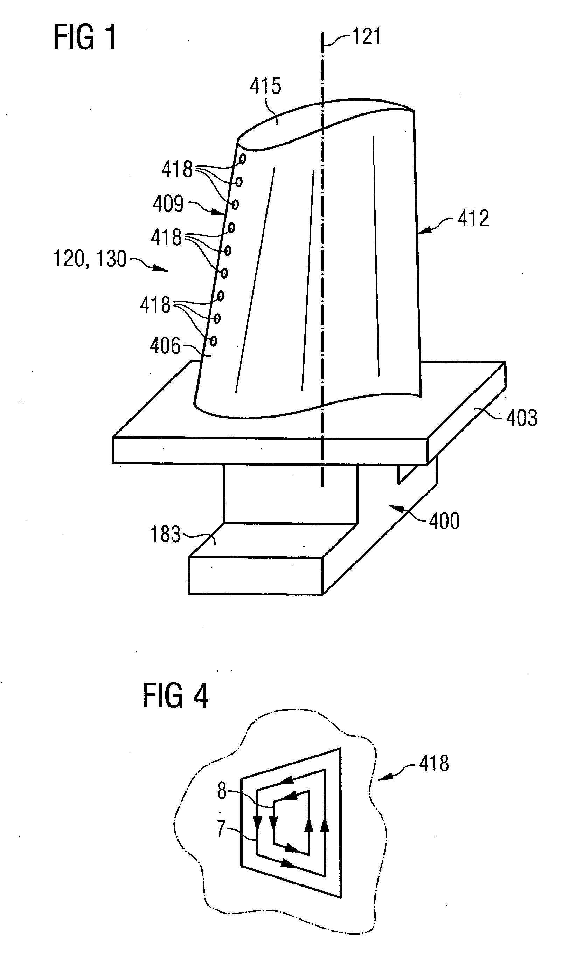

Die Figur 1 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf. Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

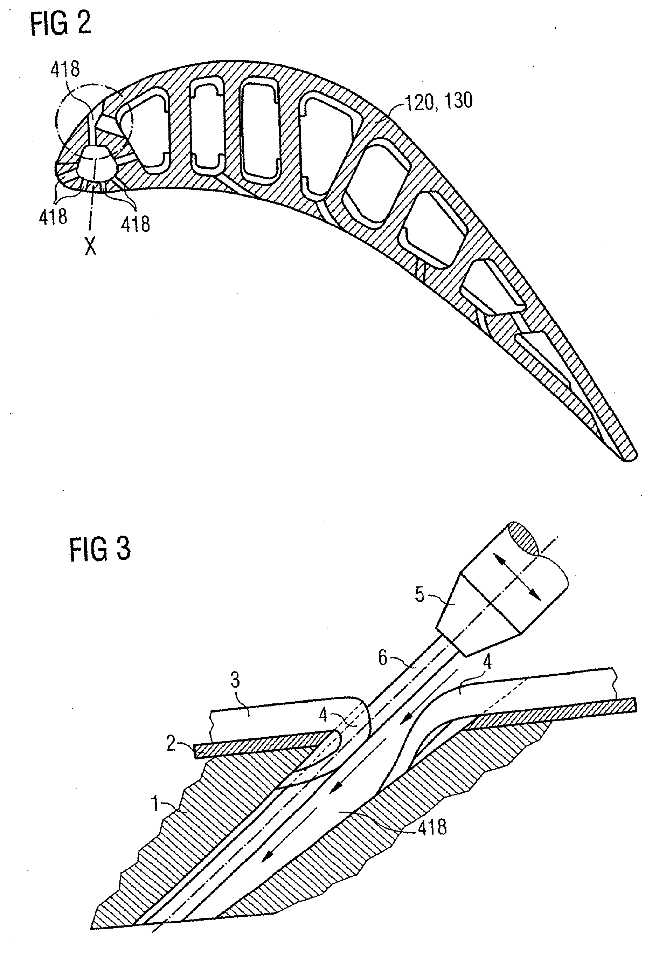

Wie in der Figur 2 gezeigt ist, ist die Schaufel 120, 130 hohl ausgeführt und weist eine Vielzahl von Kühlluftbohrungen 418 auf, über welche im Betrieb Kühlluft in das Innere der Schaufel 120, 130 geführt wird.

In dem Ausschnitt der Figur 3 ist der Aufbau der Schaufeln 120, 130 gut erkennbar. Danach weisen die Schaufeln 120, 130 einen Grundkörper 1 auf, der mit einer Beschichtung 2, 3 versehen ist. Diese Beschichtung wird von einer metallischen Grundierungsschicht 2 und einer darauf aufgebrachten keramischen Schicht 3 gebildet. Wenn sich diese Beschichtung 2, 3 während des Betriebs aufgrund von Oxidation und/oder Korrosion abnutzt oder Beschädigungen aufgrund von Korrosion bzw. mechanischen Beschädigungen auftreten, ist es wirtschaftlich sinnvoll, die Beschichtung 2, 3 zu erneuern. Hierzu wird zunächst die bestehende Beschichtung vollflächig von der Turbinenschaufel 120, 130 entfernt, wobei es im Einzelfall ausreichend sein kann, nur die äußere keramische Schicht 3 zu entfernen. Im Anschluss daran wird eine neue Beschichtung bzw. Keramikschicht 3 vollflächig auf die Turbinenschaufel 120, 130 aufgebracht. Hierbei werden die Kühlluftbohrungen 418 teilweise durch einen Schichtniederschlag (Coat-Down), der in der Figur 3 mit 4 bezeichnet ist, verschlossen. Im Anschluss an den Beschichtungsvorgang wird dieser Schichtniederschlag 4 erfindungsgemäß mit Hilfe eines Flüssigkeitsstrahls 6 lokal und gezielt im Bereich der Kühlluftbohrungen 418 entfernt, um die Kühlluftbohrung 418 wieder vollständig freizulegen.

Der Flüssigkeitsstrahl 6 wird hier von einer Düse 5 gegen die Kühlluftbohrung 418 gerichtet. Dabei können der Druck, die Form, die Zusammensetzung und der Durchmesser des Strahls 6, sowie der Abstand und Winkel zwischen der Düse 5, die ihn abgibt und dem Bauteil entsprechend den Anforderungen des Bauteils und der Beschichtung 2, 3 angepasst werden. Die Düse 5 kann bevorzugt einen Durchmesser von 0,05-0,5 mm aufweisen und beispielsweise in einem Abstand von 1-6 cm zu dem Bauteil angeordnet sein. Bei der Wahl der oben genannten Parameter kann auch Größe und Form der Öffnungen berücksichtigt werden.

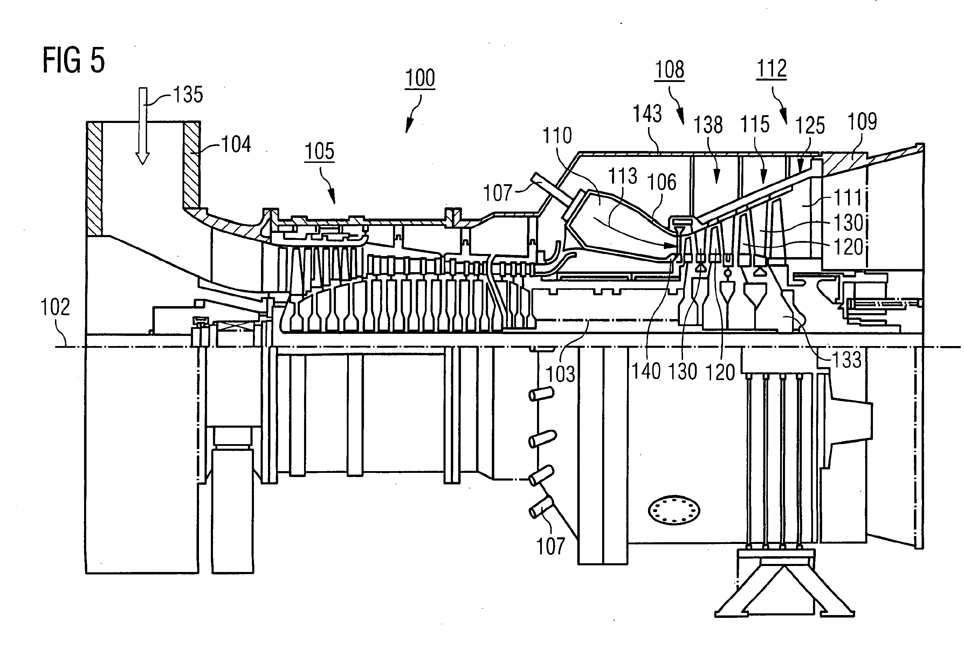

Der Flüssigkeitsstrahl 6 wird in mehreren zyklischen Durchläufen, die an der Kontur der Kühlluftbohrung 418 ausgerichtet sind, über die Öffnung geführt und trägt die Beschichtung 3 lokal in diesem Bereich ab. Das Bewegungsmuster für den Flüssigkeitsstrahl 6 ist beispielhaft in Figur 4 gezeigt, wobei die Führungslinien 7, 8 den Weg des Flüssigkeitsstrahls 6 beschreiben. Der Flüssigkeitsstrahl 6 kann von außen nach innen oder von innen nach außen von Führungslinie zu Führungslinie bewegt werden. Hierbei wird der Schichtabtrag von dem Flüssigkeitsstrahl 6 mitgerissen und direkt gebunden, so dass keine Stäube entstehen. Die Beschichtung 3 wird nur im Bereich der Öffnung entfernt und weder das Bauteil noch die darauf angebrachte Beschichtung 2, 3 außerhalb des Öffnungsbereiches nehmen Schaden.

Lauf- und Leitschaufeln 120, 130 der oben beschriebenen Art werden in Gasturbinen verwendet. Die Figur 5 zeigt eine solche Gasturbine 100 in einem Längsteilschnitt. Mit Hilfe des erfindungsgemäßen Reparaturverfahren können die Schaufeln 120, 130 im Rahmen der Wiederaufarbeitung instandgesetzt werden.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

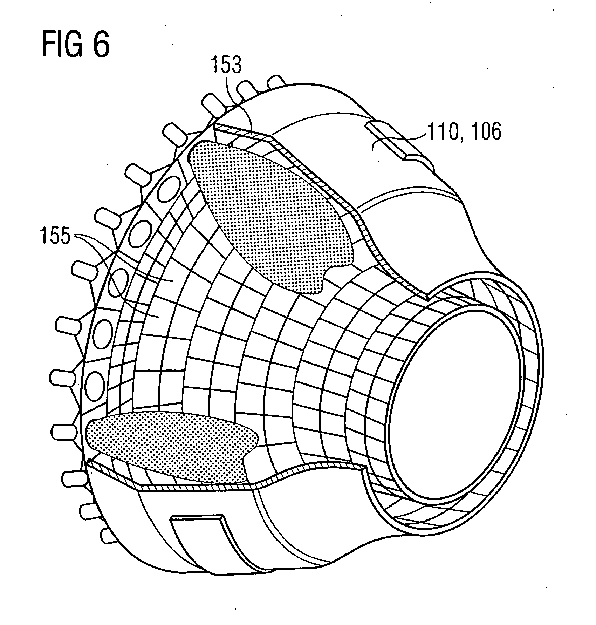

Die Figur 6 zeigt eine Brennkammer 110 einer Gasturbine. Mit Hilfe des erfindungsgemäßen Reparaturverfahrens können die Hitzeschutzelemente 155, = die Kühlluftbohrungen aufweisen können, im Rahmen der Wiederaufarbeitung instandgesetzt werden.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen noch in den Brennkammerraum 154 mündende Kühlluftbohrungen (nicht dargestellt) auf.

Jedes Hitzeschildelement 155 aus einer Legierung ist arbeitsmediumsseitig mit einer besonders hitzebeständigen Schutzschicht (MCrAIX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Zuletzt erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Reparaturverfahren zur Instandsetzung von Bauteilen, die zumindest eine Öffnung (418) aufweisen und mit einer Beschichtung versehen sind,
bei dem die Beschichtung vollständig von dem Bauteil entfernt wird,
eine neue Beschichtung (2, 3) flächig auf das Bauteil aufgebracht wird,
wobei die zumindest eine Öffnung (418) ganz oder teilweise verschlossen wird, und
die neu aufgebrachte Beschichtung (2, 3) lokal im Bereich der zumindest einen Öffnung (418) entfernt wird,
**dadurch gekennzeichnet, dass**
ein fokussierter Flüssigkeitsstrahl (6) verwendet wird, um die neu aufgebrachte Beschichtung (2, 3) lokal im Bereich der Öffnung (418) zu entfernen.

2. Verfahren nach Anspruch 1,
**dadurch gekennzeichnet, dass**
der Flüssigkeitsstrahl (6) im Wesentlichen aus Wasser besteht.

3. Verfahren nach einem der Ansprüche 1 oder 2,
**dadurch gekennzeichnet, dass**
der Flüssigkeitsstrahl (6) abrasive Partikel enthält.

4. Verfahren nach Anspruch 3,
**dadurch gekennzeichnet, dass**
die abrasiven Partikel aus Granat, Korund oder Zirkonkorund bestehen oder es enthalten.

5. Verfahren nach einem der Ansprüche 3 oder 4,
**dadurch gekennzeichnet, dass**
die abrasiven Partikel einen mittleren Durchmesser von 44-300 µm (325-45 Mesh) haben.

6. Verfahren nach einem der Ansprüche 3 bis 5,
**dadurch gekennzeichnet, dass**
die abrasiven Partikel mit einer Förderrate von 5-250 g pro Stunde im Flüssigkeitsstrahl (6) enthalten sind.

7. Verfahren nach einem der Ansprüche 1 bis 6,
**dadurch gekennzeichnet, dass**
der Flüssigkeitsstrahl (6) einen Druck zwischen 200 bis 600 bar hat.

8. Verfahren nach einem der Ansprüche 1 bis 7,
**dadurch gekennzeichnet, dass**
der Flüssigkeitsstrahl (6) von einer Düse (5) abgegeben wird, die einen Durchmesser von 0.05 bis 0.5 mm aufweist und/oder in einem Abstand von 1 bis 6 cm zum Bauteil angeordnet ist.

9. Verfahren nach einem der Ansprüche 1 bis 8,
**dadurch gekennzeichnet, dass**
die Bauteile Turbinenschaufeln (120, 130) sind.

10. Verfahren nach Anspruch 9,
**dadurch gekennzeichnet, dass**
die zumindest eine Öffnung eine Filmkühlbohrung (418) oder eine zylindrische Bohrung ist.

11. Verfahren nach einem der Ansprüche 1 bis 10,
**dadurch gekennzeichnet dass**
die neu aufgebrachte Beschichtung (2, 3) metallisch oder keramisch ist.

12. Verfahren nach einem der Ansprüche 1 bis 11,
**dadurch gekennzeichnet, dass**
die Kontur der zumindest einen Öffnung (418) mit dem Flüssigkeitsstrahl (6) abgefahren wird.

13. Verfahren nach Anspruch 12,
**dadurch gekennzeichnet, dass**
die zumindest eine Öffnung (418) in mehreren zyklischen Durchläufen abgefahren wird.
